# EUROPÄISCHE PATENTSCHRIFT

(11) **EP 1 439 090 B1**
(45) Veröffentlichungstag und Bekanntmachung des Hinweises auf die Patenterteilung: **20.06.2007**
(21) Anmeldenummer: 03029763.4
(22) Anmeldetag: 23.12.2003
(51) Int. Cl.: B60N 2/68

(54) **Rücksitzlehne für einen Fahrzeugrücksitz**
Backrest for a vehicle rear seat
Dossier pour un siège arrière de véhicule

(30) Priorität: 15.01.2003 DE 10301283
(43) Veröffentlichungstag der Anmeldung: 21.07.2004
(73) Patentinhaber: Euromotive GmbH & Co. KG, 5285 Ranshofen (AT)
(72) Erfinder: Garnweidner, Peter, 5112 Lamprechtshausen (AT); Danninger, Christian, 5204 Strasswalchen (AT)
(74) Vertreter: Pohlmann, Eckart

(56) Entgegenhaltungen:
- EP-A- 0 506 555
- EP-A- 0 989 019
- WO-A-01/89875
- FR-A- 2 786 447
- FR-A- 2 786 743
- GB-A- 457 229
- US-A- 6 027 171

## Beschreibung

Die Erfindung betrifft eine Rücksitzlehne für einen Fahrzeugrücksitz mit einem Lehnenrahmen, einer daran angebrachten Rückwand und einem Bezugskanal zur Verankerung des Sitzbezuges.

Herkömmliche Rücksitzlehnen für einen Fahrzeugrücksitz sind oft mit einer Teilung 2/3 - 1/3 oder 60 - 40 % mit Schisack und Schultergurtpunkt für die mittlere Sitzposition in der Lehne ausgebildet. Die Lehne ist entweder klappbar und auf der Oberseite am Pfosten C mit einem Schloss gehalten, wobei die unteren Lagerstellen Drehpunkte sind, oder dreh- und klappbar mit Lehnenneigungsverstellern im Hüftbereich ausgebildet.

Der Lehnenrahmen ist üblicher Weise aus einem Stahlrohrgestell gebildet, und die Rückwand besteht aus einem Stahlblech.

Neben dem hohen Gewicht aufgrund der Verwendung von Stahl als Material für den Lehnenrahmen hat der Aufbau einer derartigen Rücksitzlehne den Nachteil, dass für jedes neue Fahrzeug die kompletten Werkzeuge für die Herstellung des Lehnenrahmens und der Rückwand neu angefertigt werden müssen. Das ist mit hohen Kosten verbunden, was insbesondere für das große Tiefziehwerkzeug für die Rückwand gilt, da sich der Bezugskanal bei der üblichen Rücksitzlehnenkonstruktion im Blechteil der Rückwand befindet.

Die der Erfindung zugrunde liegende Aufgabe besteht daher darin, eine Rücksitzlehne der eingangs genannten Art zu schaffen, die einfach und kostengünstig auf verschiedene Fahrzeugmodelle angepasst werden kann und dabei keine bzw. nur geringe zusätzliche Werkzeugkosten verursacht.

Diese Aufgabe wird gemäß der Erfindung dadurch gelöst, dass der Lehnenrahmen aus Strangpressprofilteilen besteht, die in einem Stück mit dem Bezugskanal ausgebildet sind, und die Rückwand aus einem im Wesentlichen ebenen Bauteil besteht.

Bevorzugte Ausgestaltungen und Weiterbildungen der erfindungsgemäßen Rücksitzlehne sind Gegenstand der Ansprüche 2 bis 6.

Da bei der erfindungsgemäßen Rücksitzlehne der Bezugskanal in den Lehnenrahmen integriert ist, kann die Rückwand aus einem einfachen ebenen Blechteil mit Sicken bestehen. Da bei der Erzeugung der Blechplatinen immer häufiger Lasereinrichtungen eingesetzt werden, kann eine Geometrieänderung der Breite oder Höhe ohne Werkzeugaufwand realisiert werden. Die Sickung erfolgt immer im gleichen Werkzeug.

Im Folgenden werden anhand der zugehörigen Zeichnungen besonders bevorzugte Ausführungsbeispiele der Erfindung näher beschrieben. Es zeigen
Fig. 1 eine Schnittansicht durch einen Rücksitzlehnenrahmen mit üblichem Aufbau,
Fig. 2 eine perspektivische Vorderansicht eines ersten Ausführungsbeispiels der erfindungsgemäßen Rücksitzlehne,
Fig. 3 eine perspektivische Vorderansicht eines zweiten Ausführungsbeispiels der erfindungsgemäßen Rücksitzlehne und
Fig 4 eine Fig. 1 entsprechende Schnittansicht eines Ausführungsbeispiels der erfindungsgemäßen Rücksitzlehne.

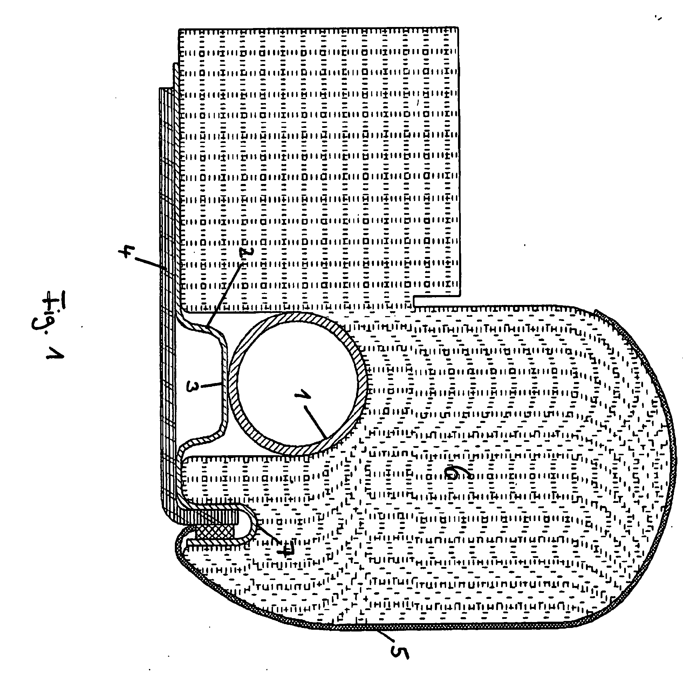

Wie es in Fig. 1 dargestellt ist, besteht eine übliche Rücksitzlehne für einen Fahrzeugrücksitz aus einem Lehnenrahmen 1 aus Stahlrohr, einer daran bei 3 angeschweißten Rückwand 2 und einem Bezugskanal 7 zur Verankerung des Sitzbezuges 5 und/oder des Teppichs 4. Zwischen dem Bezug 5 und der Rückwand 2 befindet sich ein Schaumpolster 6.

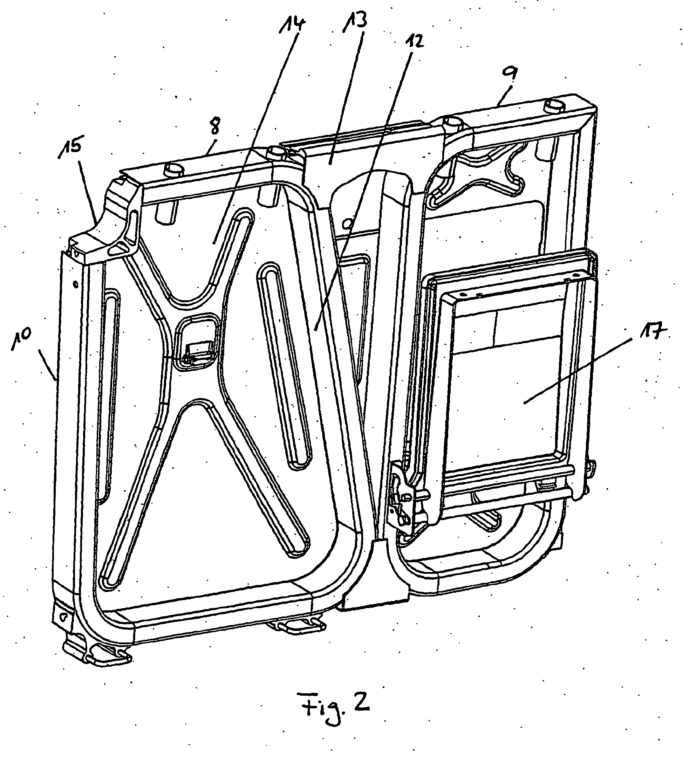

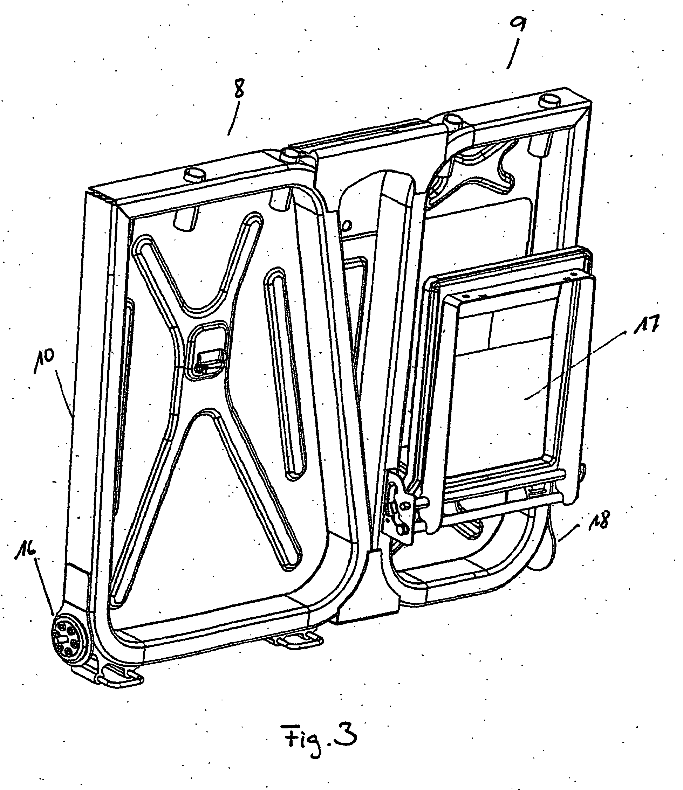

In den Figuren 2 und 3 ist der 2/3-Teil einer Rücksitzlehne gemäß der Erfindung mit 2/3-1/3-Teilung dargestellt.

Dieser Rücksitzlehnenteil umfasst einen Rücksitzlehnenteil 8 für den äußeren Sitz und einen Rücksitzlehnenteil 9 für den mittleren Sitz, an dem sich auch eine Schisack- und Armlehnenkonstruktion 17 befindet, die aus Kunststoffteilen gebildet ist.

Die Rücksitzlehnenteile 8, 9 weisen eine Rückwand 14 auf, die an den Lehnenrahmen 10 aus Strangpressprofilteilen geklebt, genietet oder geschraubt ist.

Wie es in den Figuren 2 und 3 weiterhin dargestellt ist, verläuft das Strangpressprofilteil 12 des Lehnenrahmens 10 auf der Teilungsseite zwischen dem äußeren Sitz und dem mittleren Sitz von oben nach unten schräg nach innen, so dass dieses Strangpressprofilteil 12 zusammen mit dem benachbarten Strangpressprofilteil des Lehnenrahmens des mittleren Sitzes eine V-Form bildet. Zwischen den freien Enden der Schenkel dieser V-Form ist eine Aufnahme 13 für den Gurtaufroller des Sitzgurtes des mittleren Sitzes angeordnet.

Bei dem in Fig. 2 dargestellten Ausführungsbeispiel ist an der Oberseite des Lehnenrahmens 10 eine Aufnahme für das Lehnenschloss am Pfosten C vorgesehen.

Bei dem in Fig. 3 dargestellten Ausführungsbeispiel sind demgegenüber ein Lehnenlager 16 außen und ein Lehnenlager 18 innen vorgesehen, über die die Rücksitzlehne dreh- und klappbar angebracht ist.

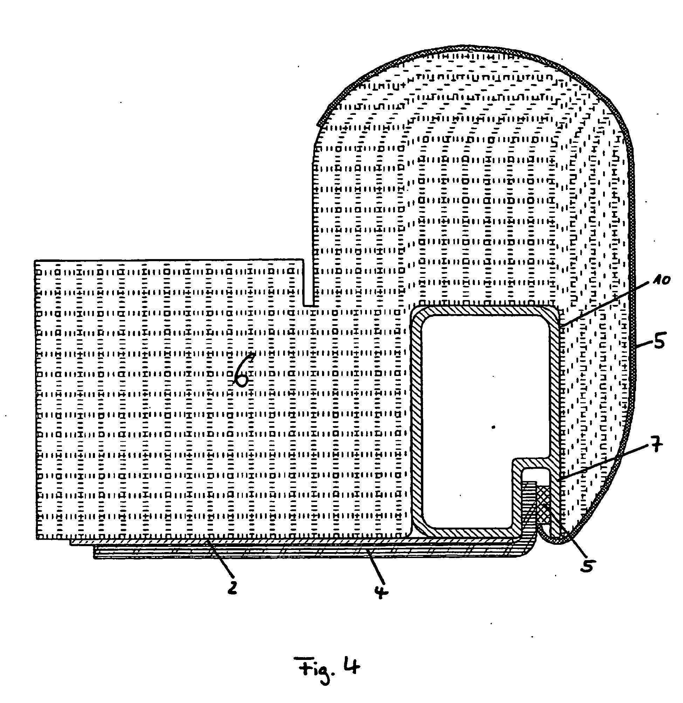

Wie es im Einzelnen in Fig. 4 dargestellt ist, ist der Bezugskanal 7 in den Lehnenrahmen 10 integriert, d.h. in einem Stück damit ausgebildet. Das hat zur Folge, dass die Rückwand 2 ein ebenes Bauteil ohne Verformungen ist, die durch Tiefziehen mittels entsprechender Tiefziehwerkzeuge gebildet werden müssten.

Daraus ergibt sich, dass die obige Rücksitzlehnenkonstruktion problemlos an verschiedene Fahrzeugmodelle angepasst werden kann, ohne dass zusätzliche Werkzeugkosten entstehen, da die Rückwand 2, die ein im Wesentlichen ebenes Bauelement ist, in ihrer Abmessung durch Änderung des Beschnittes ohne weiteres anpassbar ist. Alle anderen Bauteile der Rücksitzlehnenkonstruktion sind ohne weiteres auf jeden Fahrzeugtyp anpassbar, was insbesondere für den Lehnenrahmen gilt, dessen horizontale Rahmenseiten ohne weiteres verlängert oder gekürzt werden können.

Der Lehnenrahmen ist insbesondere aus einem Leichtmetall oder einer Leichtmetalllegierung, beispielsweise aus Aluminium, Magnesium oder einer Magnesium- oder Aluminiumlegierung gefertigt. Die Rückwand 2 kann aus Aluminium, Magnesium, Stahl oder einem Kunststoff bestehen.

Die erfindungsgemäße Rücksitzlehne mit dem oben beschriebenen Aufbau hat den weiteren Vorteil, dass bei der Anpassung an ein neueres Fahrzeug nur noch Homologationsversuche nötig sind, dass aufwändige Entwicklungstätigkeiten aber entfallen, die bei den bisherigen Rücksitzlehnenkonstruktionen aus Stahlrohrgestellen notwendig waren.

## Patentansprüche

1. Rücksitzlehne für einen Fahrzeugrücksitz mit einem Lehnenrahmen (10), einer daran angebrachten Rückwand (2) und einem Bezugskanal (7) zur Verankerung des Sitzbezuges (5), **dadurch gekennzeichnet, dass** der Lehnenrahmen (10) aus Strangpressprofilteilen besteht und in einem Stück mit dem Bezugskanal (7) ausgebildet ist, und die Rückwand (2) aus einem im Wesentlichen ebenen Bauteil besteht.

2. Rücksitzlehne nach Anspruch 1, **dadurch gekennzeichnet, dass** bei einer 2/3-1/3-Teilung der Außensitzlehnenrahmenteil (8) des 2/3-Rücksitzlehnenteils an der Teilungsseite zum mittleren Sitz von einem von oben nach unten schräg nach innen verlaufenden Strangpressprofilteil (12) begrenzt ist, das mit dem benachbarten Strangpressprofilteil des Lehnenrahmens (9) des mittleren Sitzes eine V-Form bildet, und zwischen den freien Enden der Schenkel der V-Form eine Aufnahme (13) für den Gurtaufroller für den mittleren Sitz angeordnet ist.

3. Rücksitzlehne nach Anspruch 1 oder 2, **dadurch gekennzeichnet, dass** der Lehnenrahmen (10) aus Strangpressprofilteilen aus einem Leichtmetall oder einer Leichtmetalllegierung, insbesondere aus Aluminium oder einer Aluminiumlegierung besteht.

4. Rücksitzlehne nach einem der Ansprüche 1 bis 3, **dadurch gekennzeichnet, dass** die Rückwand (2) an den Lehnenrahmen (10) geklebt ist.

5. Rücksitzlehne nach einem der Ansprüche 1 bis 3, **dadurch gekennzeichnet, dass** die Rückwand (2) an den Lehnenrahmen (10) genietet ist.

6. Rücksitzlehne nach einem der Ansprüche 1 bis 3, **dadurch gekennzeichnet, dass** die Rückwand (2) an den Lehnenrahmen (10) geschraubt ist.

## Claims

1. A rear-seat backrest for a vehicle rear seat with a backrest frame (10), a rear panel (2) mounted thereon and a cover channel (7) for anchoring the seat cover (5), **characterised in that** the backrest frame (10) comprises extruded sections and is formed in one piece with the cover channel (7), and the rear panel (2) comprises a substantially flat component.

2. A rear-seat backrest according to claim 1, **characterised in that**, in the case of 2/3-1/3 division, the backrest frame part (8) for the outer seat of the 2/3 rear-seat backrest part is bounded on the side dividing it from the middle seat by an extruded section (12) which extends obliquely inwards from top to bottom and which forms aV shape with the adjacent extruded section of the backrest frame (9) of the middle seat and a receiver (13) for the belt retractor for the middle seat is arranged between the free ends of the arms of the V shape.

3. A rear-seat backrest according to claim 1 or 2, **characterised in that** the backrest frame (10) comprises extruded sections of a light metal or a light-metal alloy, especially aluminium or an aluminium alloy.

4. A rear-seat backrest according to any one of claims 1 to 3, **characterised in that** the rear panel (2) is glued to the backrest frame (10).

5. A rear-seat backrest according to any one of claims 1 to 3, **characterised in that** the rear panel (2) is riveted to the backrest frame (10).

6. A rear-seat backrest according to any one of claims 1 to 3, **characterised in that** the rear panel (2) is screwed to the backrest frame (10).

## Revendications

1. Dossier de siège arrière pour un siège arrière de véhicule, comprenant un cadre de dossier (10), une paroi arrière (2) fixée sur celui-ci, et une goulotte (7) pour la couverture, permettant l'ancrage de la couverture (5) du siège,
**caractérisé en ce que** le cadre du dossier (10) est constitué d'éléments profilés extrudés et est configuré d'un seul tenant avec la goulotte (7) pour la couverture, et que la paroi arrière (2) est constituée d'un composant essentiellement plan.

2. Dossier de siège arrière selon la revendication 1, **caractérisé en ce que**, dans le cas d'une division 2/3-1/3, la partie du cadre de dossier (8) du siège extérieur de l'élément 2/3 du dossier de siège arrière est délimitée, sur le côté de la division face au siège central, par un élément profilé extrudé (12) s'étendant obliquement vers l'intérieur, du haut vers le bas, élément qui définit avec l'élément profilé extrudé contigu du cadre de dossier (9) du siège central une forme de V, et qu'un logement (13) pour l'enrouleur de ceinture pour le siège central est prévu entre les extrémités libres des branches de la forme de V.

3. Dossier de siège arrière selon la revendication 1 ou 2, **caractérisé en ce que** le cadre (10) du dossier est constitué d'éléments profilés extrudés en un métal léger ou un alliage de métal léger, en particulier en aluminium ou un alliage d'aluminium.

4. Dossier de siège arrière selon l'une des revendications 1 à 3, **caractérisé en ce que** la paroi arrière (2) est collée sur le cadre du dossier (10).

5. Dossier de siège arrière selon l'une des revendications 1 à 3, **caractérisé en ce que** la paroi arrière (2) est rivetée sur le cadre du dossier (10).

6. Dossier de siège arrière selon l'une des revendications 1 à 3, **caractérisé en ce que** la paroi arrière (2) est vissée sur le cadre du dossier (10).
